# EUROPEAN PATENT APPLICATION

(11) **EP 1 206 144 A2**
(43) Date of publication of application: **15.05.2002**
(21) Application number: 01124386.2
(22) Date of filing: 24.10.2001
(51) Int. Cl.: H04Q 3/66

(54) **Minimum cost path search apparatus and corresponding method**

(30) Priority: 25.10.2000 JP 2000324808
(71) Applicant: NEC CORPORATION, Tokyo (JP)
(72) Inventor: Soga, Kenji, Minato-ku, Tokyo (JP)
(74) Representative: VOSSIUS & PARTNER

(57) **Abstract**

In a cost estimation step in step S1, costs from intermediate nodes to all exit nodes are estimated and, in a path generation step in step S2, paths are generated each by extending a current search path to an adjacent path. In a path storage step in step S3, a check is made for the generated paths and, if there are free entries in a storage unit, the paths are stored. In a path selection step in step S4, a path which is stored in the entries of all intermediate nodes and an entrance node in the storage unit, which is not yet selected, and whose total of a path costs and a minimum estimated cost is the minimum is selected as a current search path. In a path output step in step S6, paths stored in the exit nodes are output as a search result.

## Description

The present invention relates to a minimum cost path search apparatus and a minimum cost path search method used by the apparatus, and more particularly to a method for searching for a minimum cost path from an entrance node to an exit node in a network.

Conventionally, the Dijkstra method is generally known as the minimum cost path search method of this type. The Dijkstra method searches for only one minimum cost path for one exit node.

The Dijkstra method is a mathematical programming method widely used as a shortest path problem, one of typical optimization problems associated with a network. This is a method for solving a shortest path problem that finds the shortest path from a source node to a destination node.

In this case, the shortest path is mathematically obtained using the optimization principle in which the shortest path from a source node to a destination node is divided into two at a specific node such that each of the two paths produced by the division becomes the shortest path in the set. That is, the Dijkstra method starts processing beginning with a null set, finds shortest path nodes, one at a time, to increase the elements of the shortest path subset, and finally finds the shortest path for the entire nodes.

Another method for searching for all paths in ascending order of costs is described in "A route search method in a road network with the intra-intersection costs taken into account and its application to a route guidance system using multimedia", Information Processing Society of Japan, pp. 970-979, Vol. 33, No. 7, July 1992. The method described in the publication stores the paths found during the search in order to search for all paths.

The search method described above first generates a link diversion list, an input to output list, and a cost difference list and, using these lists, grows a minimum cost path tree to the destination point.

However, a conventional method in which the Dijkstra method is used searches for only one minimum cost path for one exit node. Therefore, it is impossible to search for a plurality of paths in ascending order of costs.

The method of growing a minimum cost path searches for all paths. This, in turn, requires a large amount of storage in which to store the paths during the search. Another problem is that the amount of necessary storage cannot be determined before the search starts. In particular, in a topology where there are many branches, the paths to be stored cannot be stored in some cases. In this case, a path to be found may not be included in the search with the result that the paths are not obtained in order of costs.

It is an object of the present invention to provide a minimum cost path search apparatus and a minimum cost path search method capable of solving the above problems, searching for any number of minimum cost paths for each exit node in ascending order of costs in a limited amount of storage, and performing the path search speedily.

The minimum cost path search apparatus according to the present invention is a minimum cost path search apparatus that searches for a minimum cost path from an entrance node to an exit node in a network. The minimum cost path search apparatus comprises cost estimator for estimating a cost in advance from an intermediate node to the exit node; path generator for generating, for an intermediate path from the entrance node to the intermediate node, paths each extending to a node adjacent to the intermediate node; path storing memory for selecting paths to be stored, from the paths generated by the path generator, while controlling a number of paths to be stored; path selector for selecting one optimum path from the paths stored by the path storing memory; and path outputting unit for outputting obtained paths when the path storing memory stores no path.

The minimum cost path search method according to the present invention is a minimum cost path search method that searches for a minimum cost path from an entrance node to an exit node in a network. The minimum cost path search method comprises the steps of estimating a cost in advance from an intermediate node to the exit node; generating, for an intermediate path from the entrance node to the intermediate node, paths each extending to a node adjacent to the intermediate node; selecting paths to be stored, from the paths generated by the path generating means, while controlling a number of paths to be stored; selecting one optimum path from the stored paths; and outputting obtained paths when no path is stored.

The above and other objects, features and advantages of the present invention will become more apparent from the following detailed description when taken in conjunction with the accompanying drawings wherein:
Fig. 1 is a block diagram showing the configuration of a minimum cost path search apparatus in an embodiment of the present invention;
Fig. 2 is a flowchart showing the operation of a minimum cost path search method in the embodiment of the present invention;
Fig. 3 is a flowchart showing the operation of a path storing unit in Fig. 1;
Fig. 4 is a diagram showing an example of topology applicable to the embodiment of the embodiment; and
Fig. 5 is a diagram showing estimated costs calculated using the Dijkstra method for the topology shown in Fig. 4.

Some embodiments of the present invention will be described in detail by referring to the attached drawings.

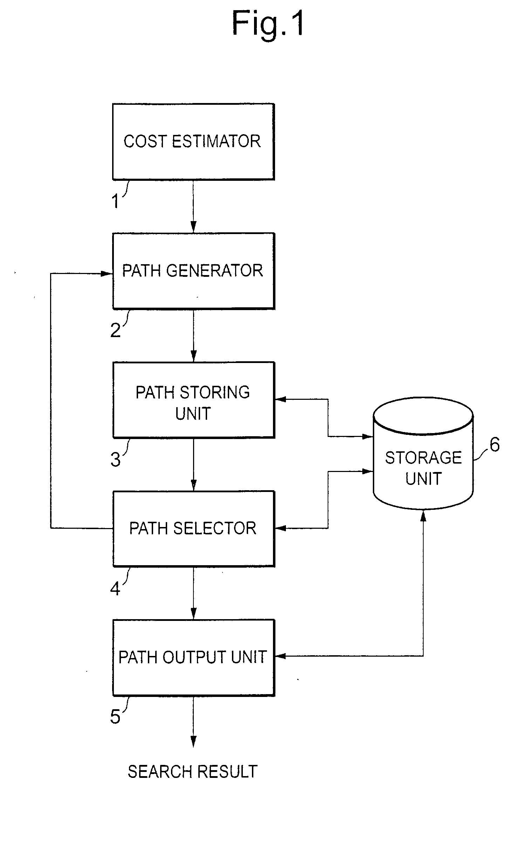

Fig. 1 is a block diagram showing the configuration of a minimum cost path search apparatus in a first embodiment according to the present invention. Referring to Fig. 1, the minimum cost path search apparatus in this embodiment comprises a cost estimator 1, a path generator 2, a path storing unit 3, a path selector 4, a path output unit 5, and a storage unit 6.

The cost estimator 1 estimates the costs of all nodes, from an intermediate node to all exit nodes. The path generator 2 generates a path from the current search path to an adjacent node . The path storing unit 3 checks paths generated by the path generator 2 and stores in the storage unit 6 up to a predetermined number of paths for the ending node.

The path selector 4 selects a path, which is not yet selected and whose total of the path cost and the minimum estimated cost is the minimum, from the paths stored in the entries of all intermediate nodes and the entrance node . The path output unit 5 outputs the paths, stored in the exit node, as a search result. In that case, the path output unit 5 outputs, in ascending order of costs, as many paths as is prepared for each of the exit nodes.

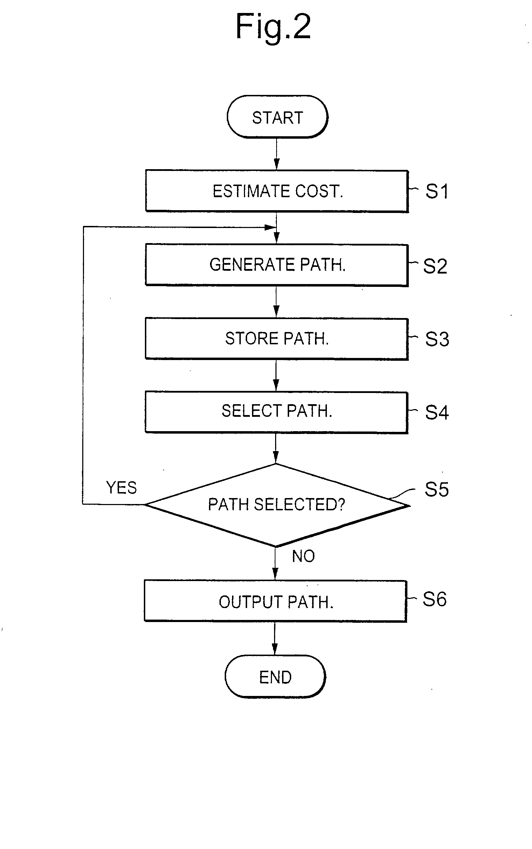

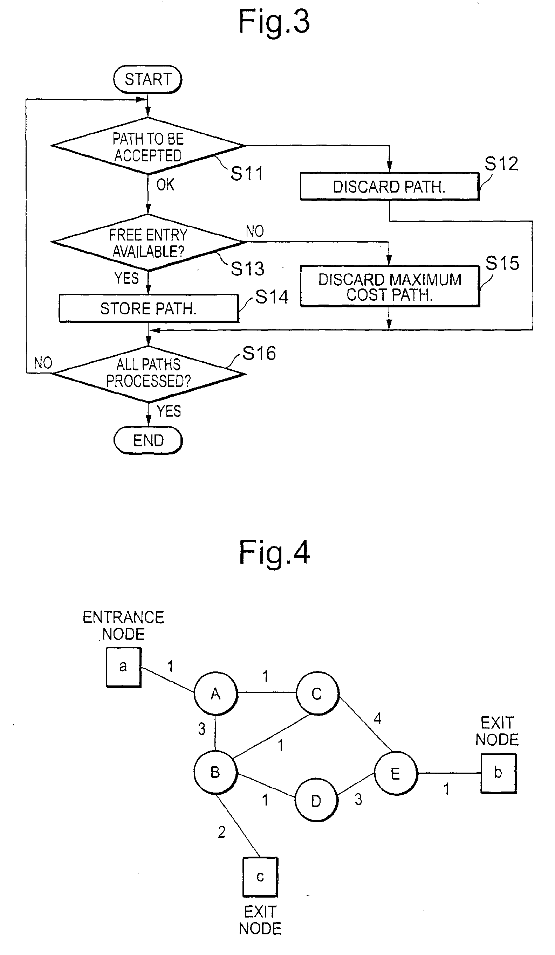

Fig. 2 is a flowchart showing the operation of a minimum cost path search method in this embodiment. Fig. 3 is a flowchart showing the operation of the path storing unit 3 shown in Fig. 1. Referring to Figs. 1 - 3, the following describes the operation of the minimum cost path search method used in this embodiment.

First, the cost estimator 1 estimates the costs of nodes, from an intermediate node to all exit nodes (step S1 in Fig. 2). In this case, the cost estimator 1 stores for each intermediate node the minimum value of the estimated costs of the nodes, from that node to the exit nodes, as the minimum estimated cost. Costs are estimated in one of the following three ways: (1) Allow the user of the search method to enter a cost, (2) Calculate the minimum cost using a method such as the Dijkstra method, a mathematical programming method widely used as a shortest path problem for networks, and (3) Enter a fixed value.

Next, the path generator 2 generates a path that is extended to an adjacent node of the current search path (step S2 in Fig. 2). In the initial path generation, the path generator 2 executes path generation with the entrance node as the current search path.

The path storing unit 3 first checks the paths generated by the path generator 2 (step S11 in Fig. 3). During the path check, the path storing unit 3 checks if a path passes through the same node two or more times.

If a path passes through the same node two or more times, the path storing unit 3 rejects and discards the path ( step S12 in Fig. 3). If a path does not pass through the same node two or more times, the path storing unit 3 accepts the path and checks the number of paths stored in the storage unit 6 (step S13 in Fig. 3). When checking the number of paths, the path storing unit 3 checks the number of paths stored in the entry of the ending node of the path. Note that a predetermined number of paths are stored in the storage unit 6 for each node and that this number is constant for all nodes in the topology.

If there is one or more free entries, the path storing unit 3 stores the route of the path and the total of passage costs on the links of the path that is though of as the path cost (step S14 in Fig. 3). If there is no free entry, the path storing unit 3 discards the maximum cost path (step S15 in Fig. 3). When discarding the maximum cost path, the path storing unit 3 discards the maximum cost path out of those stored in the entry of the ending node of the path.

After discarding a path stored in the entry of the ending node, the path storing unit 3 stores the route and the path cost of the new path in the resulting vacant entry. The path storing unit 3 repeatedly executes the above operation for all paths generated by the path generator 2 (steps S11 - S16 in Fig. 3).

From the paths stored in the storage unit 6 for all intermediate nodes and the entrance node, the path selector 4 selects a path, which is not yet selected and whose total of the path cost and the minimum estimated cost is the minimum, as the current search path (step S4 in Fig. 2). If such a path is selected successfully (step S5 in Fig. 2), control returns to step S2 to generate a path.

If such a path cannot be selected, control is passed to the path output unit 5 that outputs the paths, stored in the entry of the exit node, as the search result (step S6 in Fig. 2) and ends the path search. In the path search operation described above, as many paths as the number of paths, predetermined for each node in the storage unit 6, are output for the exit node in ascending order of costs.

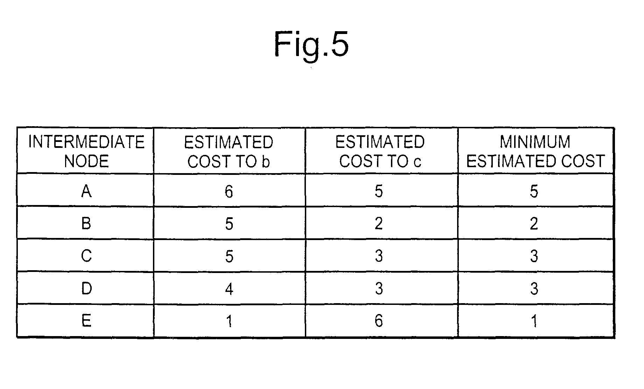

Fig. 4 is a diagram showing an example of topology used in this embodiment. Fig. 5 is a diagram showing the estimated costs calculated for the topology shown in Fig. 4 using the Dijkstra method. With reference to Fig. 1, Fig. 4, and Fig. 5, the operation of the minimum cost path search method used in this embodiment will be described.

In Fig. 4, the entrance node is indicated by a, the exit nodes are indicated by b and c, and the intermediate nodes are indicated by A, B, C, D, and E. A number beside a link indicates the passage cost. For example, the cost of "1" is required when passing through the link between node a and node A. Note that, in this example, up to two paths may be stored in the entry of each node.

First, the cost estimator 1 calculates the estimated cost from each intermediate node to each of the exit nodes and stores the minimum estimated cost. For example, Fig. 5 shows the estimate result produced by the Dijkstra method. In the first path generation, the path generator 2 generates the path a → A by extending the path to node A, which is adjacent to entrance node a, with entrance node a as the current search path.

The path storing unit 3 checks the path a → A. The path a → A, which does not pass through the same node two or more times, is accepted. The path storing unit 3 checks the number of stored paths and finds that no path is stored in the entry of node A, the ending node of the path. Therefore, the path storing unit 3 stores the path a → A and the path cost "1" in the entry of node A in the storage unit 6.

Because only the path a → A is stored in the entry of node A and this path is not yet selected, the path selector 4 selects this path as the current search path and returns control to the path generator 2.

In the second path generation, the path generator 2 generates three paths, a → A → B, a → A → C, and a → A → a, with the path a → A as the current search path. The path storing unit 3 checks those paths, rejects the path a → A → a which passes through node a twice, and discards the path. The path storing unit 3 checks the number of paths, finds that there are free entries in the storage unit 6, and then stores the path a → A → B (path cost = 4) and the path a → A → C (path cost = 2) in the entries of node B and node C, respectively.

Now, the paths not yet selected and stored in the entries of the entrance node and the intermediate nodes are the path a → A → B (path cost + minimum estimated cost = 6) stored in the entry of node B and the path a → A → C (path cost + minimum estimated cost = 5) stored in the entry of node C. The path selector 4 selects the path a → A → C, whose total of the path cost and the minimum estimated cost is the minimum, as the current search path and passes control back to the path generator 2.

In the third path generation, the path generator 2 generates three paths, a → A → C → E, a → A → C → B, and a → A → C → A, with the path a → A → C as the current search path. The path storing unit 3 checks those paths, rejects the path a → A → C → A which passes through node A twice, and discards the path. The path storing unit 3 checks the number of paths, finds that there are free entries in the storage unit 6, and then stores the path a → A → C → E (path cost = 6) and the path a → A → C → B (path cost = 3) in the entries of node E and node B, respectively.

Now, the paths not yet selected and stored in the entries of the entrance node and the intermediate nodes are the path a → A → B (path cost + minimum estimated cost = 6) and the path a → A → C → B (path cost + minimum estimated cost = 5) stored in the entry of node B and the path a → A → C → E (path cost + minimum estimated cost = 7) stored in the entry of node E . The path selector 4 selects the path a → A → C → B, whose total of the path cost and the minimum estimated cost is the minimum, as the current search path and passes control back to the path generator 2.

In the fourth path generation, the path generator 2 generates four paths, a → A → C → B → c, a → A → C → B → D , a → A → C → B → A, and a → A → C → B → C, with the path a → A → C → B as the current search path. The path storing unit 3 checks those paths, rejects the path a → A → C → B → A which passes through node A twice and a → A → C → B → C which passes through node C twice, and discards the paths. The path storing unit 3 checks the number of paths, finds that there are free entries in the storage unit 6, and then stores the path a → A → C → B → c (path cost = 5) and the path a → A → C → B → D (path cost = 4) in the entries of node c and node D, respectively.

Now, the paths not yet selected and stored in the entry of the entrance node and the intermediate nodes are the path a → A → B (path cost + minimum estimated cost = 6) stored in the entry of node B, the path a → A → C → E (path cost + minimum estimated cost = 7) stored in the entry of node E, and the path a → A → C → B → D (path cost + minimum estimated cost = 7) stored in the entry of node D. The path selector 4 selects the path a → A → B, whose total of the path cost and the minimum estimated cost is the minimum, as the current search path and passes control back to the path generator 2.

In the fifth path generation, the path generator 2 generates four paths, a → A → B → c, a → A → B → D, a → A → B → A, and a → A → B → C, with the path a → A → B as the current search path. The path storing unit 3 checks those paths, rejects the path a → A → B → A which passes through node A twice, and discards the path. The path storing unit 3 checks the number of paths, finds that there are free entries in the storage unit 6, and then stores the path a → A → B → c (path cost = 6), the path a → A → B → D (path cost = 5), and the path a → A → B → C (path cost = 5) in the entries of node c, node D, and node C, respectively.

Now, the paths not yet selected and stored in the entry of the entrance node and the intermediate nodes are the path a → A → B → C (path cost + minimum estimated cost = 8) stored in the entry of node C, the path a → A → C → E (path cost + minimum estimated cost = 7) stored in the entry of node E, and the path a → A → C → B → D (path cost + minimum estimated cost = 7, )and the path a → A → B → D (path cost + minimum estimated cost = 8) stored in the entry of node D. The path selector 4 selects the path a → A → C → E, whose total of the path cost and the minimum estimated cost is the minimum, as the current search path and passes control back to the path generator 2.

The path a → A → C → B → D and the path a → A → C → E have the same score (path cost + minimum estimated cost = 7). When two paths have the same score, the path selector 4 selects one of them.

In the sixth path generation, the path generator 2 generates three paths, a → A → C → E → b, a → A → C → E → D, and a → A → C → E → C, with the path a → A → C → E as the current search path. The path storing unit 3 checks those paths, rejects the path a → A → C → E → C which passes through node C twice, and discards the path. The path storing unit 3 checks the number of paths, finds that there are free entries in the storage unit 6, and then stores the path a → A → C → E → b (path cost = 7) in the entry of node b.

On the other hand, for the path a → A → C → E → D (path cost = 9) to be stored in the entry of node D, the path storing unit 3 checks the number of paths and finds that it has already stored the maximum of two nodes for node D and therefore discards the maximum cost path. In this case, the path storing unit 3 compares the paths a → A → C → B → D (path cost = 4) , a → A → B → D (path cost =5), and a → A → C → E → D (path cost = 9), discards the maximum cost path a → A → C → E → D, and stores the other nodes in the entry of node D.

Now, the paths not yet selected and stored in the entries of the entrance node and the intermediate nodes are the path a → A → B → C (path cost + minimum estimated cost = 8) stored in the entry of node C and the paths a → A → C → B → D (path cost + minimum estimated cost = 7) and a → A → B → D (path cost + minimum estimated cost=8) stored in the entry of node D . The path selector 4 selects the path a → A → C → B → D, whose total of the path cost and the minimum estimated cost is the minimum, as the current search path and passes control back to the path generator 2.

In the seventh path generation, the path generator 2 generates two paths, a → A → C → B → D → B and a → A → C → B → D → E, with the path a → A → C → B → D as the current search path. The path storing unit 3 checks those paths, rejects the path a → A → C → B → D → B which passes through node B twice, and discards the path. The path storing unit 3 checks the number of paths, finds that there are free entries in the storage unit 6, and then stores the path a → A → C → B → D → E (path cost = 7)in the entry of node E.

Now, the paths not yet selected and stored in the entries of the entrance node and the intermediate nodes are the path a → A → B → C (path cost + minimum estimated cost = 8) stored in the entry of node C, the path a → A → C → B → D → E (path cost + minimum estimated cost = 8) stored in the entry of node E, and the path a → A → B → D (path cost + minimum estimated cost = 8) stored in the entry of node D. The path selector 4 selects the path a → A → B → C, whose total of the path cost and the minimum estimated cost is the minimum, as the current search path and passes control back to the path generator 2.

The paths a → A → B → C, a → A → C → B → D → E, and a → A → B → D have the same score (path cost + minimum estimated cost = 8). When two or more paths have the same score, the path selector 4 selects one of them.

In the eighth path generation, the path generator 2 generates three paths, a → A → B → C → B, a → A → B → C → E, and a → A → B → C → A, with the path a → A → B → C as the current search path. The path storing unit 3 checks those paths, rejects the paths a → A → B → D → B which passes through node B twice and a → A → B → C → A which pass through node A twice, and discards the paths.

For the path a → A → B → C → E (path cost = 9) to be. stored in the entry of node E, the path storing unit 3 checks the number of paths and finds that it has already stored the maximum of two nodes for node E and therefore discards the maximum cost path. In this case, the path storing unit 3 compares the paths a → A → C → E (path cost = 6), a → A → C → B → D → E (path cost = 7), and a → A → B → C → E (path cost = 9), discards the maximum cost path a → A → B → C → E, and stores the other nodes in the entry of node E.

Now, the paths not yet selected and stored in the entry of the entrance node and the intermediate nodes are the path a → A → C → B → D → E (path cost + minimum estimated cost = 8) stored in the entry of node E and the path a → A → B → D (path cost + minimum estimated cost=8) stored in the entry of node D . The path selector 4 selects the path a → A → B → D, whose total of the path cost and the minimum estimated cost is the minimum, as the current search path and passes control back to the path generator 2.

The path a → A → C → B → D → E and the path a → A → B → D have the same score (path cost + minimum estimated cost = 8). When two or more paths have the same score, the path selector 4 selects one of them.

In the ninth path generation, the path generator 2 generates two paths, a → A → B → D → B and a → A → B → D → E, with the path a → A → B → D as the current search path. The path storing unit 3 checks those paths, rejects the path a → A → B → D → B which passes through node B twice, and discards the path.

The path storing unit 3 checks the number of paths and finds that it has already stored the maximum of two nodes for node E and therefore discards the maximum cost path. In this case, the path storing unit 3 compares the paths a → A → C → E (path cost = 6), a → A → C → B → D → E (path cost = 7), and a → A → B → D → E (path cost = 8), discards the maximum cost path a → A → B → D → E, and stores the other nodes in the entry of node E.

Now, the path not yet selected and stored in the entry of the entrance node and the intermediate nodes is the path a → A → C → B → D → E (path cost + minimum estimated cost = 8) stored in the entry of node E. The path selector 4 selects this path as the current search path and passes control back to the path generator 2.

In the tenth path generation, the path generator 2 generates three paths, a → A → C → B → D → E → b, a → A → C → B → D → E → D, and a → A → C → B → D → E → C, with the path a → A → C → B → D → E as the current search path. The path storing unit 3 checks those paths, rejects the path a → A → C → B → D → E → C which passes through node C twice and the path a → A → C → B → D → E → D which passes through D twice, and discards the paths. The path storing unit 3 checks the number of paths, finds that there are free entries in the storage unit 6, and then stores the path a → A → C → B → D → E → b (path cost = 8) in the entry of node b. There is no path not yet selected and stored in the entry of the entrance node and the intermediate nodes, and control is passed to the path output unit 5.

The path output unit 5 outputs two paths, a → A → C → E → b and a → A → C → B → D → E → b stored in the entry of node b and two paths, a → A → C → B → c and a → A → B → c stored in the entry of exit node c. The above operation outputs two paths, each for exit node b and exit node c, in ascending order of costs.

As described above, when storing paths in the entries of intermediate nodes and exit nodes during the search, selecting paths to be stored, with the number of paths limited, allows a specified number of minimum cost paths to be obtained in ascending order of costs for each exit node in a limited amount of storage. In addition, paths may be searched for speedily by estimating the costs in advance and by limiting the number of entries for a path during the search to narrow the search range.

Next, a minimum cost path search method in a second embodiment of the present invention will be described. The minimum cost path search method in the second embodiment is different in the number of stored paths and the way in which paths are selected in the processing of the path storing unit 3 in order to select paths different from those selected in the first embodiment. Except them, the minimum cost path search method in the second embodiment is similar to that in the first embodiment. The apparatus configuration is similar to that in the first embodiment.

In the second embodiment, the number of paths that can be stored is constant in the whole topology. This change in design allows any number of paths to be obtained for all exit nodes in ascending order of costs. The operation of the second embodiment will be described below. Note that cost estimation and path generation are the same as those in the first embodiment.

The path storing unit 3 in the second embodiment first checks the paths generated by the path generator 2. During the path check, the path storing unit 3 checks if a path passes through the same node two or more times. If a path passes through the same node two or more times, the path storing unit 3 rejects and discards the path.

If a path does not pass through the same node two or more times, the path storing unit 3 accepts the path and checks the number of paths that are already stored. When checking the number of paths, the path storing unit 3 checks the number of paths stored in the whole topology. If there is one or more free entries, the path storing unit 3 stores the path, that is, it stores the route of the path and the total of the path cost and the minimum estimated cost.

If there is no free entry, the path storing unit 3 discards the maximum cost path. When discarding the maximum cost path, the path storing unit 3 discards one of the paths which include the path itself and those paths stored in the entry of the ending node of the path and whose total of the path cost and the minimum estimated cost is the maximum among the paths in the entrance node and the intermediate nodes. After discarding a path, the path storing unit 3 stores the route and the total of the path cost and the minimum estimated cost in the resulting vacant entry. This is executed repeatedly for all paths generated by the path generator 2.

As the current search path, the path selector 4 in this embodiment selects, from the paths stored in the whole topology, a path whose ending node is the entrance node or an intermediate node and whose total of the path cost and the estimated minimum cost is the minimum. The selected path is deleted from the storage unit 6. If such a path is selected, control returns to the path generator 2. If such a path cannot be selected, control is passed to the path output unit 5.

The path output unit 5 in this embodiment outputs, as the search result, the paths which are stored in the whole topology and whose ending node is an exit node and then ends the path search. As described above, the path search operation in this embodiment outputs the predetermined number of paths in ascending order of costs in the whole topology.

Next, with reference to an example of topology shown in Fig. 4, the operation of the minimum cost path search method in this embodiment will be described. Note that in this example, up to four paths may be stored in the whole topology.

First, the cost estimator 1 performs the same operation as that described in the first embodiment. The Dijkstra method, if used in this embodiment, produces the result as shown in Fig. 5. In the first path generation, the path generator 2 generates the path a → A by extending the path to node A, which is adjacent to entrance node a, with entrance node a as the current search path.

The path storing unit 3 checks the path a → A. The path a → A, which does not pass through the same node two or more times, is accepted. The path storing unit 3 checks the number of stored paths and finds that no path is stored in the whole topology. Therefore, the path storing unit 3 stores the path a → A and the total "5" of the path cost "1" and the minimum estimated cost "4" in the entry of node A.

Because only the path a → A is stored in the whole topology and the ending node, node A, of this path is an intermediate node, the path selector 4 deletes this path from the storage unit 6 and, with this path as the current search path, returns control to the path generator 2.

In the second path generation, the path generator 2 generates three paths, a → A → B, a → A → C, and a → A → a, with the path a → A as the current search path. The path storing unit 3 checks those paths, rejects the path a → A → a which passes through node a twice, and discards the path. The path storing unit 3 checks the number of paths, finds that there are free entries in the storage unit 6, and then stores the path a → A → B (path cost + minimum estimated cost = 6) and the path a → A → C (path cost + minimum estimated cost = 5).

Now, the stored paths are the path a → A → C (path cost + minimum estimated cost = 5) and the path a → A → B (path cost + minimum estimated cost = 6). The path selector 4 deletes the path a → A → C whose total of the path cost and the minimum estimated cost is the minimum from the storage unit 6 and, with this path as the current search path, passes control back to the path generator 2.

In the third path generation, the path generator 2 generates three paths, a → A → C → A, a → A → C → B, and a → A → C → E, with the path a → A → C as the current search path. The path storing unit 3 checks those paths, rejects the path a → A → C → A which passes through node A twice, and discards the path. The path storing unit 3 checks the number of paths, finds that there are free entries in the storage unit 6, and then stores the path a → A → C → B (path cost + minimum estimated cost = 5) and the path a → A → C → E (path cost + minimum estimated cost = 7).

Now, the stored paths are the path a → A → C → B (path cost + minimum estimated cost = 5), the path a → A → B (path cost + minimum estimated cost = 6), and the path a → A → C → E (path cost + estimated minimum cost = 7). The path selector 4 deletes the path a → A → C → B whose total of the path cost and the minimum estimated cost is the minimum from the storage unit 6 and, with this path as the current search path, passes control back to the path generator 2.

In the fourth path generation, the path generator 2 generates four paths, a → A → C → B → A, a → A → C → B → C, a → A → C → B → c, and a → A → C → B → D, with the path a → A → C → B as the current search path. The path storing unit 3 checks those paths, rejects the path a → A → C → B → A which passes through node A twice and the path a → A → C → B → C which passes though node C twice, and discards the paths. The path storing unit 3 checks the number of paths, finds that there are free entries in the storage unit 6, and then stores the path a → A → C → B → C (path cost + minimum estimated cost = 5) and the path a → A → C → B → D (path cost + minimum estimated cost = 7).

Now, the stored paths are the path a → A → C → B → c (path cost + minimum estimated cost = 5), the path a → A → B (path cost + minimum estimated cost = 6), the path a → A → C → E (path cost + estimated minimum cost = 7), and the path a → A → C → B → D (path cost + estimated minimum cost = 7). The path selector 4 deletes the path a → A → B whose total of the path cost and the minimum estimated cost is the minimum and whose ending node is an intermediate node from the storage unit 6 and, with this path as the current search path, passes control back to the path generator 2.

In the fifth path generation, the path generator 2 generates four paths, a → A → B → A, a → A → B → C, a → A → B → c, and a → A → B → D, with the path a → A → B as the current search path. The path storing unit 3 checks those paths, rejects the path a → A → B → A which passes through node A twice, and discards the path. The path storing unit 3 checks the number of paths, finds that there is no free entry in the storage unit 6, and then discards the maximum cost path.

In this case, the path storing unit 3 compares the costs of the paths a → A → C → E (path cost + estimated minimum cost = 7), a → A → C → B → D (path cost + estimated minimum cost = 7), a → A → B → C (path cost + estimated minimum cost = 8), and a → A → B → D (path cost + estimated minimum cost = 8). Because the ending node of the other stored path a → A → C → B → c (path cost + estimated minimum cost = 5) and the path to be stored now a → A → B → c (path cost + estimated minimum cost = 6) is an exit node, they are not discarded.

Therefore, only two paths of the candidate paths are stored. The other paths, a → A → B → C (path cost + estimated minimum cost = 8) and the path a → A → B → D (path cost + estimated minimum cost = 8) are discarded as the maximum cost path.

Now, the stored paths are the path a → A → C → B → c (path cost + minimum estimated cost = 5), the path a → A → B → c (path cost + minimum estimated cost = 6), the path a → A → C → E (path cost + estimated minimum cost = 7), and the path a → A → C → B → D (path cost + estimated minimum cost = 7). The path selector 4 deletes the path a → A → C → E whose total of the path cost and the minimum estimated cost is the minimum and whose ending node is an intermediate node from the storage unit 6 and, with this path as the current search path, passes control back to the path generator 2. The path a → A → C → E and the path a → A → C → B → D have the same score (path cost + minimum estimated cost = 7). When two paths have the same score, the path selector 4 selects one of them.

In the sixth path generation, the path generator 2 generates three paths, a → A → C → E → C, a → A → C → E → b, and a → A → C → E → D, with the path a → A → C → E as the current search path. The path storing unit 3 checks those paths, rejects the path a → A → C → E → C which passes through node C twice, and discards the path. The path storing unit 3 checks the number of paths, finds that there is no free entry in the storage unit 6, and therefore discards the maximum cost path.

In this case, the path storing unit 3 compares the costs of the paths a → A → C → B → D (path cost + estimated minimum cost = 7) and a → A → C → E → D (path cost + estimated minimum cost = 12). Because the ending node of the other stored paths a → A → C → B → c (path cost + estimated minimum cost = 5) and a → A → B → c (path cost + estimated minimum cost = 6) and the ending node of the path to be stored now a → A → C → E → b (path cost + estimated minimum cost = 7) are an exit node, they are not discarded.

Therefore, only one path of the candidate paths is stored. The other path, a → A → C → E → D (path cost + estimated minimum cost = 12) is discarded as the maximum cost path.

Now, the stored paths are the path a → A → C → B → c (path cost + minimum estimated cost = 5), the path a → A → B → c (path cost + estimated minimum cost = 6), the path a → A → C → E → b (path cost + estimated minimum cost = 7), and the path a → A → C → B → D (path cost + minimum estimated cost = 7). The path selector 4 deletes the path a → A → C → B → D whose total of the path cost and the minimum estimated cost is the minimum and whose ending node is an intermediate node from the storage unit 6 and, with this path as the current search path, passes control back to the path generator 2.

In the seventh path generation, the path generator 2 generates two paths, a → A → C → D → E and a → A → C → B → D → B, with the path a → A → C → B → D as the current search path. The path storing unit 3 checks those paths, rejects the path a → A → C → B → D → B which passes through node B twice, and discards the path. The path storing unit 3 checks the number of paths, finds that there are free entries in the storage unit 6, and then stores the path a → A → C → B → D → E (path cost + minimum estimated cost = 8).

Now, the stored paths are the path a → A → C → B → c (path cost + minimum estimated cost = 5), a → A → B → c (path cost + estimated minimum cost = 6), a → A → C → E → b (path cost + estimated minimum cost = 7), and the path a → A → C → B → D → E (path cost + minimum estimated cost = 8). The path selector 4 deletes the path a → A → C → B → D → E whose total of the path cost and the minimum estimated cost is the minimum and whose ending node is an intermediate node from the storage unit 6 and, with this path as the current search path, passes control back to the path generator 2.

In the eighth path generation, the path generator 2 generates three paths, a → A → C → B → D → E → C, a → A → C → B → D → E → b, and a → A → C → B → D → E → D, with the path a → A → C → B → D → E as the current search path. The path storing unit 3 checks those paths, rejects the path a → A → C → B → D → E → C which passes through node C twice and the path a → A → C → B → D → E → D which passes through node D twice, and discards the paths. The path storing unit 3 checks the number of paths, finds that there are free entries in the storage unit 6, and then stores the path a → A → C → B → D → E → b (path cost + minimum estimated cost = 8).

Now, the stored paths are the path a → A → C → B → c (path cost + minimum estimated cost = 5), the path a → A → B → c (path cost + minimum estimated cost = 6) , the path a → A → C → E → b (path cost + minimum estimated cost = 7), and the path a → A → C → B → D → E → b (path cost + minimum estimated cost = 8). The path selector 4 passes control to the path output unit 5 because there is no stored path whose ending node is an intermediate node.

The path output unit 5 outputs four stored paths, a → A → C → B → c, a → A → B → c, a → A → C → E → b, and a → A → C → B → D → E → b. The above operation outputs from all exit nodes the specified number of paths, four in this example, in ascending order of costs.

The minimum cost path search apparatus and the minimum cost search path method used by the apparatus have the advantages given below. That is, when searching for a minimum cost path, from an entrance node to exit nodes, in the network, the apparatus and the method according to the present invention estimate in advance the cost from each of the intermediate nodes to the exit nodes, generates a path from a node to an intermediate node by extending the path to a node adjacent to the intermediate node, selects from those generated paths one or more paths to be stored while controlling the number of paths to be stored, selects the optimum path from the stored paths, and outputs the paths when there is no stored paths . This method allows a specified number of minimum cost paths to be obtained speedily in ascending order of costs for each exit node in a limited amount of storage.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A minimum cost path search apparatus that searches for a minimum cost path from an entrance node to exit nodes in a network, said minimum cost path search apparatus comprising:
cost estimator for estimating a cost in advance from an intermediate node to the exit node;
path generator for generating, for an intermediate path from the entrance node to the intermediate node, paths each extending to a node adjacent to the intermediate node;
path storing memory for selecting paths to be stored, from the paths generated by said path generator, while controlling a number of paths to be stored;
path selector for selecting one optimum path from the paths stored by said path storing memory; and
path outputting unit for outputting obtained paths when said path storing memory stores no path.

2. The minimum cost path search apparatus according to claim 1,
wherein said cost estimator uses an externally entered cost as the estimated cost.

3. The minimum cost path search apparatus according to claim 1,
wherein said cost estimator calculates a minimum cost using a Dijkstra method that is a mathematical programming method.

4. The minimum cost path search apparatus according to claim 1,
wherein said cost estimator uses a predetermined fixed value as the estimated cost.

5. The minimum cost path search apparatus according to claim 1, 2, 3 or 4,
wherein said path storing memory limits a number of paths to be stored for each node.

6. The minimum cost path search apparatus according to claim 1, 2, 3 or 4,
wherein said path storing memory limits a number of paths to be stored for all nodes.

7. A minimum cost path search method that searches for a minimum cost path from an entrance node to exit nodes in a network, said minimum cost path search method comprising the steps of:
estimating a cost in advance from an intermediate node to the exit node;
generating, for an intermediate path from the entrance node to the intermediate node, paths each extending to a node adjacent to the intermediate node;
selecting paths to be stored, from the paths generated by said path generating means, while controlling a number of paths to be stored;
selecting one optimum path from the stored paths; and
outputting obtained paths when no path is stored.

8. The minimum cost path search method according to claim 7,
wherein said step of estimating a cost uses an externally entered cost as the estimated cost.

9. The minimum cost path search method according to claim 7,
wherein said step of estimating a cost calculates a minimum cost using a Dijkstra method that is a mathematical programming method.

10. The minimum cost path search method according to claim 7,
wherein said step of estimating a cost uses a predetermined fixed value as the estimated cost.

11. The minimum cost path search method according to claim 7, 8, 9 or 10,
wherein said step of selecting paths limits a number of paths to be stored for each node.

12. The minimum cost path search method according to claim 7, 8, 9 or 10,
wherein said step of selecting paths limits a number of paths to be stored for all nodes.
